# EUROPEAN PATENT APPLICATION

(11) **EP 4 759 752 A1**
(43) Date of publication of application: **17.06.2026**
(21) Application number: 25707632.3
(22) Date of filing: 08.01.2025
(51) Int. Cl.: B65G 1/04, B66F 9/07

(54) **SPLICED GANTRY FOR RAIL HANDLING ROBOT AND RAIL HANDLING ROBOT**

(30) Priority: 04.11.2024 CN 202422682392 U
(71) Applicant: Hangzhou Hikrobot Co., Ltd., Hangzhou, Zhejiang 310051 (CN)
(72) Inventor: DUAN, Jinchao, Hangzhou, Zhejiang 310051 (CN)
(74) Representative: Yang, Shu
(86) International application number: PCT/CN2025/071324
(87) International publication number: WO 2026/091306

(57) **Abstract**

Embodiments of the present application disclose a splicing portal frame for a rail transfer robot and the rail transfer robot. The splicing portal frame comprises column units and a splicing structure for fixedly connecting two docking ends of one pair of column units; wherein, the splicing structure comprises locating columns, locating holes and a connecting member, wherein the locating columns and the locating holes are respectively arranged at two docking end faces of the pair of the column units, and the locating holes are used for inserting and installing the locating columns; then, two ends of the connecting member along the first direction are respectively fixedly installed at the docking ends of the pair of column units, in this way, the splicing structure can fixedly connect the two docking ends of the pair of the column units or fixedly connect the pair of the column units in its length direction, which prolongs the height of the portal frame of the rail transfer robot and solves the technical problem of the limited work height of the rail transfer robot caused by the short length of the existing portal frame.

## Description

The present application claims the priority to a Chinese patent application 202422682392.6 filed with the China National Intellectual Property Administration (CNIPA) on November 04, 2024 and entitled "SPLICING PORTAL FRAME FOR RAIL TRANSFER ROBOT AND RAIL TRANSFER ROBOT", which is incorporated herein by reference in its entirety.

### Technical Field

The application relates to the field of logistics technology, in particular to a splicing portal frame for a rail transfer robot and the rail transfer robot.

### Background

A rail transfer robot is a transfer robot which is installed on a facade of a shelf unit and can travel horizontally along the shelf unit. Specifically, horizontal rails are arranged at different heights of the facade of the shelf unit. Then, a pair of portal frames of the rail transfer robot can be installed on the horizontal rails by, for example, travel wheels for horizontal travelling, and transfer mechanism of the rail transfer robot is installed on the pair of portal frames in a manner capable of lifting and lowering. In this way, the transfer mechanism can carry out inbound and outbound works for any storage position of the shelf unit.

However, due to limitations of processing and profile, etc., an existing portal frame is usually short in length, which limits the work height of the rail transfer robot.

### Summary

For at least one aspect of the above technical problems, embodiments of the application provide a splicing portal frame for a rail transfer robot and the rail transfer robot. The splicing portal frame can fixedly connect at least one pair of column units along its length direction through a splicing structure, which prolongs the height of the portal frame of the rail transfer robot and solves the technical problem of limited work height of the rail transfer robot caused by the short length of the existing portal frame.

In a first aspect, an embodiment of the application provides a splicing portal frame for a rail transfer robot, which comprises column units extending along a first direction and a splicing structure for fixedly connecting two docking ends of one pair of column units;
wherein a surface of each column unit is provided with a concave guide groove, and the guide groove extends along the first direction;
the splicing structure comprises locating columns, locating holes for inserting the locating columns, and a connecting member, wherein the locating columns and the connecting member extend along the first direction;
wherein, the locating columns and the locating holes are respectively arranged at two docking end faces of the pair of the column units, and two ends of the connecting member along the first direction are respectively fixedly installed to two docking ends of the pair of column units; and
when the two docking ends of the pair of column units are fixedly connected by the splicing structure, the connecting member avoids the guide grooves, so that one pair of the guide grooves are spliced into a straight rail for lifting and lowering a transfer mechanism of the rail transfer robot.

In an embodiment, preferably, the connecting member has an L-shaped or U-shaped cross section perpendicular to the first direction.

In an embodiment, preferably, in a plane perpendicular to the first direction, a cross section of the column unit comprises a connecting part extending along a second direction perpendicular to the first direction, and two ends of the connecting part have one pair of guiding parts extending towards a same side, so that a space between the pair of the guide parts (12) forms the concave guide groove.

In an embodiment, preferably, a side of the connecting part facing away from the guiding parts is provided with a support part;
wherein, a first outer surface of the support part facing away from the connecting part and a second outer surface of at least one of the guide parts are used for fixedly installing the connecting member, so that the connecting member can avoid the guide groove.

In an embodiment, preferably, the first outer surface is provided with a first installation locating groove, which extends along the first direction, and is used for locating and installing a first screw that fastens the connecting member and the column units; and/or,
the second outer surface is provided with a second installation locating groove, which extends along the first direction, and is used for locating and installing a second screw that fastens the connecting member with the column unit.

In an embodiment, preferably, the support part is arranged to be hollow.

In an embodiment, preferably, each column unit includes a first column profile extending along the first direction;
wherein, the locating columns and the locating holes are respectively arranged at two docking end faces of one pair of the first column profiles, and the connecting member comprises a first connection profile, and two ends of the first connection profile are respectively fixed at ends of the pair of the first column profiles.

In an embodiment, preferably, the column unit comprises a second column profile extending along the first direction and a connection flange fixedly installed on an end face of the second column profile;
wherein, the locating columns and the locating holes are respectively arranged on two docking end faces of one pair of the connection flanges, and the connecting member comprises one pair of second connection profiles, which are fixedly installed at docking ends of the second column profiles and are fixedly installed to the connection flanges; and
the connecting member further comprises flange connection screws for fixedly installing the pair of the connection flanges that are docked.

In an embodiment, preferably, the connection flange is arranged to protrude relative to a cross section of the second column profile in a plane perpendicular to the first direction;
wherein, the second connection profile comprises a first installation part extending along the first direction, an end of the first installation part facing the connection flange is provided with a second installation part perpendicular to the first direction, and the second installation part is used to abut against a portion of the connection flange protruding relative to the cross section of the second column profile; and
the flange connection screws are used for fixedly installing the pair of the connection flanges that are docked and the pair of the second installation parts.

In a second aspect, an embodiment of the application provides a rail transfer robot, which comprises a splicing portal frame and a transfer mechanism installed on the splicing portal frame in a manner capable of lifting and lowering, wherein the splicing portal frame is the above splicing portal frame.

One or more technical solutions provided in the embodiments of the application at least have the following technical effects or advantages:
Embodiments of the present application disclose a splicing portal frame for a rail transfer robot and the rail transfer robot. The splicing portal frame comprises column units and a splicing structure for fixedly connecting two docking ends of one pair of column units; wherein, the splicing structure comprises locating columns, locating holes and a connecting member, wherein the locating columns and the locating holes are respectively arranged at two docking end faces of the pair of the column units, and the locating holes are used for inserting and installing the locating columns; then, two ends of the connecting member along the first direction are respectively fixedly installed to the two docking ends of the pair of column units, in this way, the splicing structure can fixedly connect the two docking ends of the pair of the column units or fixedly connect the pair of the column units along its length direction, which prolongs the height of the portal frame of the rail transfer robot and solves the technical problem of the limited work height of the rail transfer robot caused by the short length of the existing portal frame.

Moreover, when the splicing structure of the embodiments of the present application fixedly connect the two docking ends of one pair of column units, the connecting member of the splicing structure will avoid the concave guide groove in the surface of the column unit, so that it can be understood that one pair of guide grooves can be spliced into a straight rail for lifting and lowering the transfer mechanism of the rail transfer robot.

### Brief Description of the Drawings

In order to explain the technical solutions of the embodiments of the application more clearly, drawings used in the description of the embodiments of the application will be briefly introduced below. Obviously, the drawings in the following description are only some embodiments of the application. For ordinary skilled in the art, other drawings can be obtained based on these drawings without any creative effort.
Fig. 1 is a structural schematic diagram of a splicing portal frame according to an embodiment of the present application;
Fig. 2 is an enlarged partial view of Fig. 1;
Fig. 3 is a structural schematic diagram of a second column profile with a connection flange provided at the end thereof according to an embodiment of the present application, wherein the connection flange in Fig. 3 is provided with locating holes;
Fig. 4 is a structural schematic diagram of the second column profile with the connection flange provided at the end thereof according to an embodiment of the present application, wherein the connection flange in Fig. 4 is provided with locating columns;
Fig. 5 is a structural schematic diagram that one pair of the first column profiles is installed in a docking manner according to an embodiment of the present application;
Fig. 6 is a structural schematic diagram of one of the first column profiles in Fig. 5, where an end face of the first column profile is provided with the locating holes;
Fig. 7 is a structural schematic diagram of another first column profile in Fig. 5, where an end face of the first column profile is provided with the locating columns.

In which, the reference numbers are as follows:
10- column unit,
11- connection part, 12- guide part, 13- support part, 14- guide groove,
121- second outer surface, 122- second installation locating groove,
131- first outer surface, 132- first installation locating groove,
15- first column profile, 16- second column profile, 17- connection flange,
171- flange connection through hole,
20- splicing structure,
21- locating column, 22- locating hole,
231- first connection profile,
232- second connection profile,
2321- first installation part, 2322- second installation part,
30- flange connection screw,
40- flange fixing screw,
100- transfer mechanism,
X- first direction, Y- second direction.

### Detailed Description

In order to better understand the above technical solution, the following will describe in detail the exemplary embodiments of the present application with reference to the attached drawings. Obviously, the described embodiments are only a part of the embodiments of the present application, but not all the embodiments of the present application. It should be understood that the present application is not limited by the exemplary embodiments described here.

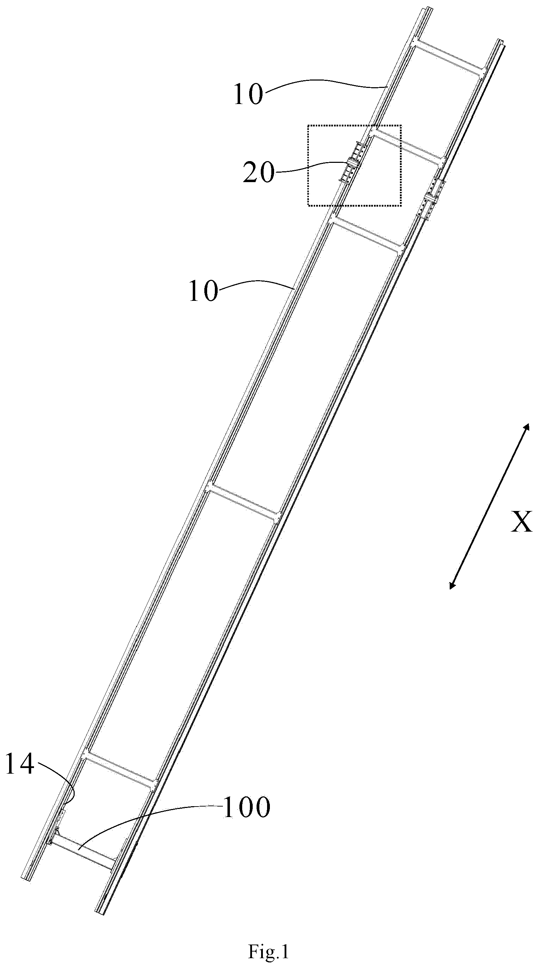

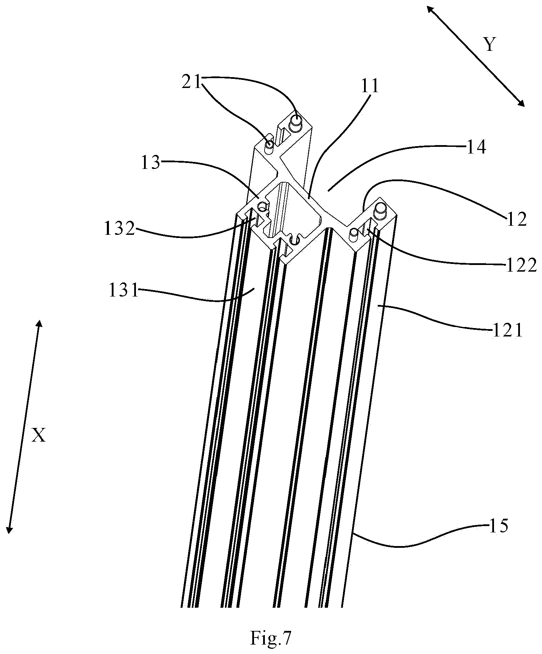

Please refer to Fig. 1 to Fig. 7, a splicing portal frame for a rail transfer robot is provided. The splicing portal frame includes column units 10 extending along a first direction X and a splicing structure 20 for fixedly connecting two docking ends of one pair of column units 10.

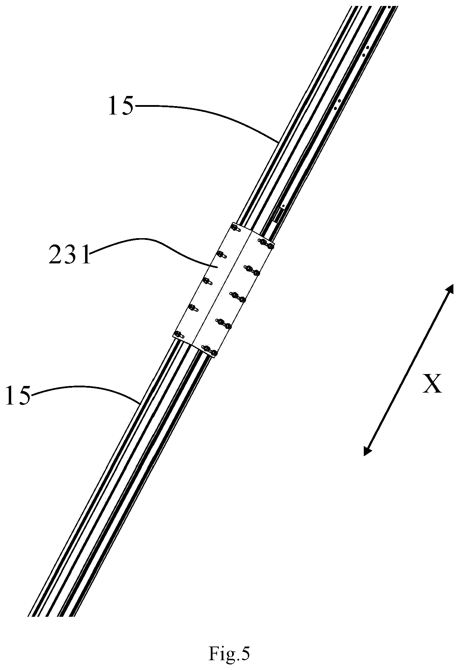

The column unit in Fig. 1 to Fig. 4 includes a second column profile and a connection flange; the column unit in Fig. 5 to Fig. 7 includes a first column profile.

A surface of each column unit 10 is provided with a concave guide groove 14, and the guide groove 14 extends along the first direction X; the splicing structure 20 includes locating columns 21, locating holes 22 for inserting the locating columns 21, and a connecting member, wherein the locating columns 21 and the connecting member extend along the first direction X.

The locating columns 21 and the locating holes 22 are respectively arranged at two docking end faces of one pair of column units 10, and two ends of the connecting member along the first direction X are fixedly installed to the two docking ends of the pair of column units 10.

Moreover, when the two docking ends of the pair of column units 10 are fixedly connected by the splicing structure 20, the connecting member avoids the guide groove 14, so that one pair of guide grooves 14 are spliced into a straight rail for lifting and lowering a transfer mechanism 100 of the rail transfer robot.

Overall, the splicing structure 20 of this embodiment can fixedly connect the two docking ends of at least one pair of column units 10 to form a splicing column, so that one pair of splicing columns can be arranged in parallel to form a splicing portal frame, which prolongs the length of the splicing portal frame and the work height of the rail transfer robot.

Of course, the splicing column can also be formed by three or more column units 10 being spliced in the length direction. At this time, it can be understood that the docking ends of the column units 10 that are docked in pairs are fixedly connected through the splicing structure 20.

Specifically, the splicing structure 20 of this embodiment includes locating holes 22, locating columns 21 and a connecting member.

The locating columns 21 and the locating holes 22 extend along the first direction, that is, in the length direction of the column unit 10, and the locating columns 21 and the locating holes 22 are respectively arranged at two docking end faces of one pair of column units 10. Here, it can be understood that the locating columns 21 or the locating holes 22 can be directly arranged at the end face of the column unit, or it can be understood that the locating columns 21 or the locating holes 22 can also be arranged at the end face of the column unit 10 through other structures (such as the connection flange described below) fixed to the end face of the column unit 10.

Then, the locating holes 22 are used for the insertion and installation of the locating columns 21. At this time, it can be understood that the two docking ends of one pair of column units 10 can be located and inserted through the insertion and installation of the locating columns 21 and the locating holes 22, thereby improving the accuracy of installing the column units 10 in a docking manner.

Wherein, the connecting member extends along the first direction X, that is, in the length direction of the column unit 10, and two ends of the connecting member along the first direction X are respectively fixedly installed to the two docking ends of one pair of column units 10. Here, it can be understood that after the two docking ends of the pair of column units 10 are located and inserted through the above locating columns 21 and the locating holes 22, the two docking ends of the pair of column units 10 after been located and inserted can be fixedly installed.

That is to say, for the two docking ends of one pair of column units 10, in this embodiment, the two docking ends are first located and inserted through the locating columns 21 and the locating holes 22, and then the two docking ends are fixedly connected through the connecting member, so that the splicing operation is simple and the splicing structure is stable.

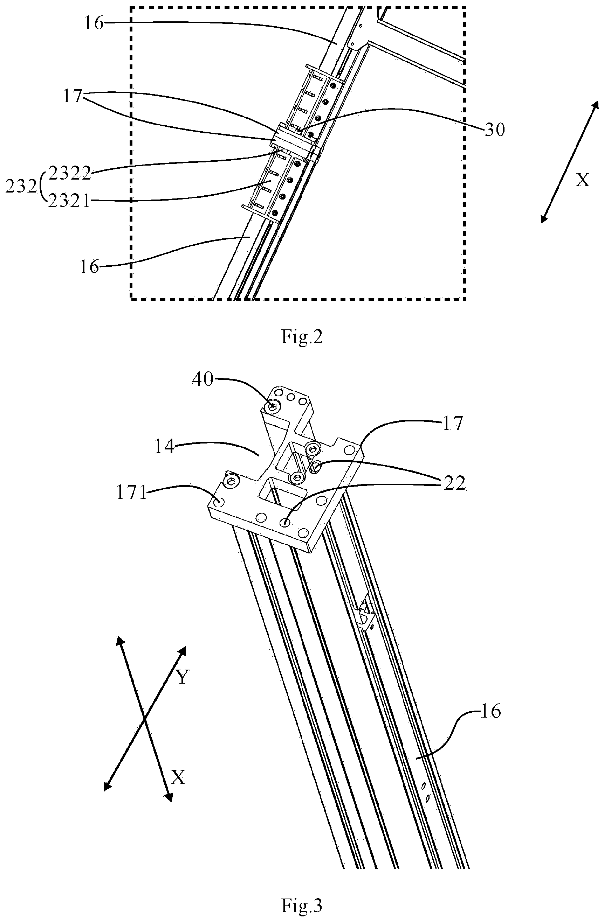

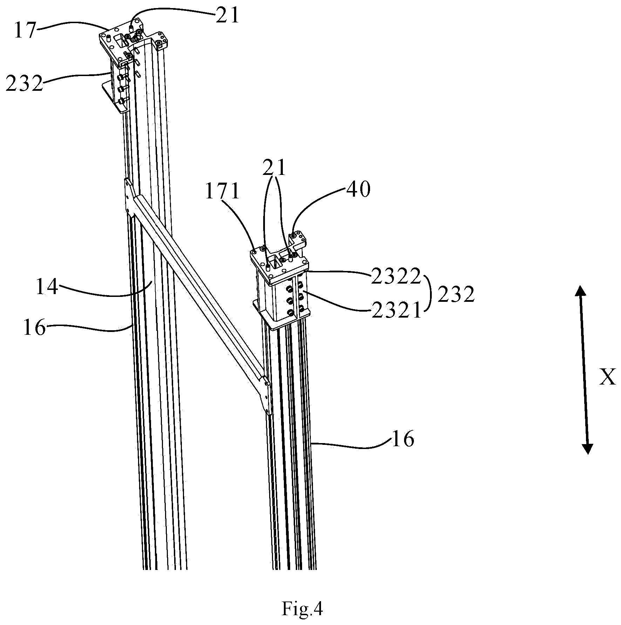

It can be understood that the connecting member aims to fixedly install the two docking ends of the pair of column units 10 after been located and inserted, and the connecting member can be a single profile (as shown in Fig. 5, the first connection profile 231) or a separate profile (as shown in Fig. 2 and Fig.4, a pair of second connection profiles 232), and this embodiment does not limit this.

In addition, it can be understood that a surface of each column unit 10 is provided with a concave guide groove 14, and the guide groove 14 extends along the first direction, and after the two docking ends of the pair of column units 10 are fixedly installed, one pair of guide grooves 14 can be spliced into a straight rail for lifting and lowering the transfer mechanism of the rail transfer robot; wherein, the connecting member of this embodiment should avoid the guide groove 14 to avoid blocking the lifting and lowering of the transfer mechanism.

Specifically, it can be understood that the connecting member can have a cross section, such as an L-shaped or U-shaped cross section perpendicular to the first direction, and the connecting member with L-shaped or U-shaped cross section can avoid the guide groove 14, for example, the connecting member is an angle iron or an U-shaped channel steel, which is not limited in this embodiment.

An embodiment of the present application provides a splicing portal frame for a rail transfer robot, which comprises column units 10 and a splicing structure 20 for fixedly connecting two docking ends of one pair of column units 10; wherein, the splicing structure 20 comprises locating columns 21, locating holes 22 and a connecting member, wherein the locating columns 21 and the locating holes 22 are respectively arranged at two docking end faces of the pair of column units 10, and the locating holes 22 are used for inserting and installing the locating columns 21; then, two ends of the connecting member along the first direction are respectively fixedly installed to the two docking ends of the pair of column units 10, in this way, the splicing structure 20 can fixedly connect the two docking ends of the pair of column units 10, or, fixedly connect the pair of column units 10 in a length direction thereof, which prolongs the height of the portal frame of the rail transfer robot, and solves the technical problem of the limited work height of the rail transfer robot caused by the short length of the existing portal frame.

Moreover, when the splicing structure 20 of this embodiment fixedly connects the two docking ends of the pair of column units 10, the connecting member of the splicing structure 20 will avoid the concave guide groove 14 on the surface of the column unit 10, in this way, it can be understood that one pair of guide grooves 14 can be spliced into a straight rail for lifting and lowering the transfer mechanism of the rail transfer robot.

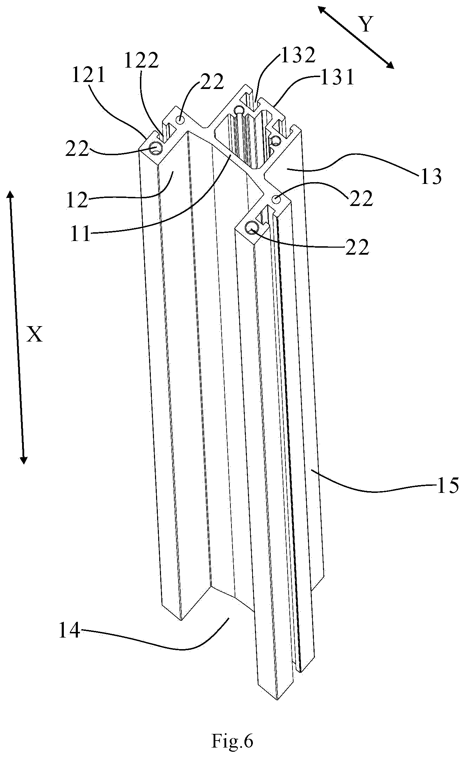

With regard to the cross-section of the column unit 10, in one possible implementation, please refer to Fig. 6, in a plane perpendicular to the first direction X, the cross-section of the column unit 10 includes a connecting part 11 extending along a second direction Y, which is perpendicular to the first direction X, and two ends of the connecting part 11 have one pair of guide parts 12 extending towards the same side, so that the space between the pair of guide parts 12 forms a concave guide groove 14.

Specifically, referring to Fig. 6, the cross-section of the column unit 10 (the column unit in Fig. 6 is specifically the first column profile 15) perpendicular to the first direction includes a connecting part 11, the connecting part 11 extends along the second direction Y. Then, two ends of the connecting part 11 have one pair of guide parts 12 extending towards the same side, so that the space between the pair of guide parts 12 can form a concave guiding groove 14. The connecting portion 11 extending along the second direction Y can be understood as the connecting portion 11 having a certain width along the second direction Y.

It can be understood that at this time, a bottom surface of the guide groove 14 (i.e., a surface of the connecting part facing the guide part) can be used for the travel wheels of the transfer mechanism to travel up and down, and side surfaces of the guide groove 14 (i.e., opposite surfaces of the guide part) can limit the travelling of the travel wheels of the transfer mechanism.

In a specific embodiment, a side of the connecting part 11 facing away from the guiding part 12 is provided with a support part 13; wherein, a first outer surface 131 of the support part 13 facing away from the connecting part 11 and a second outer surface 121 of at least one guide part 12 are used for fixedly installing the connecting member, so that the connecting member can avoid the guide groove 14.

In this embodiment, the support part 13 is arranged on the side of the connecting part 11 facing away from the guide part 12 to increase the stability of the column unit 10.

In a preferred implementation, the support part 13 can be hollow to reduce the weight of the column unit 10.

Specifically, it can be understood that when the connecting member has a L-shaped cross section, the first outer surface 131 of the support part 13 facing away from the connecting part 11 and the second outer surface 121 of any guide part 12 are used for fixedly installing the connecting member with the L-shaped cross section; when the connecting member has an U-shaped cross section, the first outer surface 131 of the support part 13 facing away from the connecting part 11 and one pair of second outer surfaces 121 of one pair of guiding parts 12 are used for fixedly installing the connecting member with the U-shaped cross section, so that the connecting member can avoid the guide groove 14.

In a specific implementation, the first outer surface 131 is provided with a first installation locating groove 132, the first installation locating groove 132 extends along the first direction X and is used for locating and installing the fastening a first screw that fastens the connecting member with the column unit 10.

That is, specifically, the first outer surface 131 of the support part 13 facing away from the connecting part 11 is provided with the first installation locating groove 132, the first installation locating groove 132 extends along the first direction and can locate the first screw, wherein, specifically, for example, two first installation locating grooves 132 shown in Fig. 6 can be provided on the first outer surface 131.

In a specific implementation, the second outer surface 121 is provided with a second installation locating groove 122, the second installation locating groove 122 extends along the first direction X and is used for locating and installing a second screw that fastens the connecting member with the column unit 10.

Similarly, specifically, the second outer surface 121 of the guide part 12 is provided with the second installation locating groove 122, the second installation locating groove 122 extends along the first direction X and can locate the second screw, wherein, specifically, for example, one second installation locating groove 122 shown in Fig. 6 can be provided on the second outer surface 121.

Of course, it can be understood that in some implementations, only the first outer surface 131 is provided with the first installation locating groove 132 while the second outer surface 121 is not provided with the second installation locating groove 122, or, only the second outer surface 121 is provided with the second installation locating groove 122 while the first outer surface 131 is not provided with the first installation locating groove 132, or, the first outer surface 131 and the second outer surface 122 can be simultaneously provided with the first installation locating groove 132 and the second installation locating groove 122, respectively.

Regarding the manner of the arrangement of the locating columns 21 and the locating holes 22, in a possible implementation, with referring to Figs. 5 to 7, the column unit 10 includes a first column profile 15 extending along the first direction X; wherein the locating columns 21 and the locating holes 22 are respectively arranged at two docking end faces of one pair of first column profiles 15, and the connecting member comprises a first connection profile 231, and two ends of the first connection profile 231 are respectively fixed at the ends of the pair of first column profiles 15.

In this embodiment, the locating columns 21 and the locating holes 22 mentioned above can be directly arranged on the end faces of the first column profiles 15.

That is, in one pair of first column profiles 15, the locating columns 21 are arranged on the docking end face of one of the first column profiles 15, and the locating holes 22 are arranged on the docking end face of the other first column profile 15.

At this time, it can be understood that the connecting member is an integrated first connection profile 231, and two ends of the first connection profile 231 are directly fixedly installed at the ends of the pair of first column profiles 15.

Regarding the manner of the arrangement of the locating columns 21 and the locating holes 22, in another possible embodiment, with referring to Figs. 1 to 4, the column unit 10 includes a second column profile 16 extending along the first direction X and a connection flange 17 fixedly installed on an end face of the second column profiles 16; wherein, the locating columns 21 and the locating holes 22 are respectively arranged at two docking end faces of one pair of connection flanges 17, and the connecting member comprises one pair of second connection profiles 232, which are fixedly installed at the docking ends of the second column profiles 16 and are fixedly installed to the connection flanges 17; and the connecting member further includes flange connection screws 30 for fixedly installing the pair of connection flanges 17 that are docked.

In this embodiment, the locating columns 21 and the locating holes 22 mentioned above can be arranged on the connection flanges 17 fixedly installed on the end faces of the second column profiles 16.

That is, the connection flange 17 can be first fastened to the end face of the second column profile 16 by flange fixing screws 40, then, in one pair of second column profiles 16, the locating columns 21 are arranged on the connection flange 17 at an end of one of the second column profiles 16, and the locating holes 22 are arranged on the connection flange 17 at an end of the other second column profile 16.

At this time, it can be understand that the connecting member is one pair of second connection profiles 232 arranged separately, and each second connection profile 232 is used to fixedly install one second column profile 16 to the connection flange 17 at its end; then, the connecting member also includes flange connection screws 30 for fastening one pair of connection flanges 17 (the connection flanges 17 are provided with flange connection through holes 171 through which the flange connection screws 30 pass), so that the docking ends of the pair of second column profiles 16 can be fixedly connected.

In other words, for each second column profile 16, a second connection profile 232 is fixedly installed at a docking end of the second column profile 16, and a connection flange 17 is fixedly installed at an end face of the docking end of the second column profile 16, and the connection flange 17 is fixedly installed to the second connection profile 232; and one pair of connection flanges 17 at the docking ends of one pair of second column profiles 16 are also fixedly installed by the flange connecting screws 30.

Regarding the fixed installation of the connection flange 17 and the second connection profile 232, in a specific embodiment, in a plane perpendicular to the first direction X, the connection flange 17 is arranged to protrude relative to the cross section of the second column profile 16; wherein, the second connection profile 232 includes a first installation part 2321 extending along the first direction X, an end of the first installation part 2321 facing the connection flange 17 is provided with a second installation part 2322 perpendicular to the first direction X, and the second installation part 2322 is used to abut against a portion of the connection flange 17 protruding relative to the cross section of the second column profile 16. In addition, the flange connection screws 30 are used to fixedly install one pair of the connection flanges 17 that are docked and one pair of second mounting portions 2322.

In the plane perpendicular to the first direction X, the connection flange 17 is arranged to protrude relative to the cross section of the second column profile 16, which can be understood as the cross-sectional contour of the connection flange 17 being larger than that of the second column profile 16 in the plane perpendicular to the first direction X, thereby causing the cross-sectional contour of the connection flange 17 to protrude beyond that of the second column profile 16.

Specifically, first of all, in the plane perpendicular to the first direction, the connection flange 17 should be arranged to protrude relative to the cross section of the second column profile 16.

Then, the second connection profile 232 includes a first installation part 2321 and a second installation part 2322 arranged perpendicular to the connection flange 17, the first installation part 2321 extends along the first direction, the first installation part 2321 is used for being fixedly installed to the second column profile 16, and an end of the first installation part 2321 facing the connection flange 17 is vertically bent to form the second installation part 2322. The second installation part 2322 abuts against a portion of the connection flange 17 protruding relative to the second column profile 16, so that the connection flange 17 can be fixedly installed to the second connection profile 232.

Furthermore, it can be understood that fixedly installing the second mounting portion 2322 to the portion of the connection flange 17 protruding relative to the second column profile 16 can be realized specifically with the help of the flange connecting screws 30. That is to say, the flange connecting screws 30 arranged along the first direction X can not only fixedly install one pair of connection flanges 17, but also can fixedly install one pair of second installation parts 2322 respectively abutting against the pair of connection flanges 17 at the same time, and the installation structure is simple.

Based on the splicing portal frame disclosed in the above embodiment, the present application also discloses a rail transfer robot, which comprises the splicing portal frame and a transfer mechanism 100 installed on the splicing portal frame in a manner capable of lifting and lowering, wherein the splicing portal frame is the splicing portal frame shown in the above-mentioned Figs. 1 to 7.

The basic principle of the present application has been described above in combination with specific embodiments, but it should be noted that the merits, advantages and effects and the like mentioned in the present application are only examples rather than limitations, and cannot be considered as necessary for each embodiment of the present application. In addition, the specific details disclosed above are only for the purpose of illustration and for the purpose of facilitating understanding, but not limitation, and the above details do not limit that the present application must be implemented with the above specific details.

The block diagrams of devices, apparatuses, equipment and systems involved in the present application are only illustrative examples and are not intended to require or imply that they must be connected, arranged and configured in the manner shown in the block diagram. As those skilled in the art will recognize, these devices, apparatuses, equipment and systems can be connected, arranged and configured in any manner. Words such as "including", "containing", "having" and so on are open-ended terms, which refer to "including but not limited to" and can be used interchangeably therewith. The terms "or" and "and" as used herein refer to the terms "and/or" and can be used interchangeably with them unless the context clearly indicates otherwise. The term "such as" used herein refers to the phrase "such as but not limited to" and can be used interchangeably with it.

It should also be noted that in the apparatuses, devices and methods of the present application, the parts or steps can be decomposed and/or recombined. These decompositions and/or re-combinations should be regarded as equivalents of the present application.

The above description of the disclosed aspects is provided to enable any person skilled in the art to make or use the present application. Various modifications to these aspects will be obvious to those skilled in the art, and the general principles defined herein can be applied to other aspects without departing from the scope of the present application. Therefore, the present application is not intended to be limited to the aspects illustrated herein, but rather to follow the broadest scope consistent with the principles and novel features disclosed herein.

The foregoing description has been presented for purposes of illustration and description. Furthermore, this description is not intended to limit the embodiments of the present application to the forms disclosed herein. Although a plurality of exemplary aspects and embodiments have been discussed above, those skilled in the art will recognize that certain variations, modifications, changes, additions and sub-combinations thereof should be included within the scope of protection of the present application.

## Claims

1. A splicing portal frame for a rail transfer robot, wherein the splicing portal frame comprises column units (10) extending along a first direction and a splicing structure (20) for fixedly connecting two docking ends of one pair of column units;
wherein a surface of each column unit (10) is provided with a concave guide groove (14), and the guide groove (14) extend along the first direction;
the splicing structure (20) comprises locating columns (21), locating holes (22) for inserting the locating columns (21) and a connecting member, wherein the locating columns (21) and the connecting member extend along the first direction;
wherein, the locating columns (21) and the locating holes (22) are respectively arranged at two docking end faces of the pair of the column units (10), and two ends of the connecting member along the first direction are respectively fixedly installed to the two docking ends of the pair of column units (10); and
when the two docking ends of the pair of column units (10) are fixedly connected by the splicing structure (20), the connecting member avoids the guide grooves (14), so that one pair of guide grooves (14) are spliced into a straight rail for lifting and lowering a transfer mechanism of the rail transfer robot.

2. The splicing portal frame according to claim 1, wherein the connecting member has an L-shaped or U-shaped cross section perpendicular to the first direction.

3. The splicing portal frame according to claim 1, wherein, in a plane perpendicular to the first direction, a cross section of the column unit (10) comprises a connecting part (11) extending along a second direction perpendicular to the first direction, and two ends of the connecting part (11) have one pair of guiding parts (12) extending towards a same side, so that a space between the pair of the guide parts (12) forms the concave guide groove (14).

4. The splicing portal frame according to claim 3, wherein a side of the connecting part (11) facing away from the guiding parts (12) is provided with a support part (13);
wherein, a first outer surface (131) of the support part (13) facing away from the connecting part (11) and a second outer surface (121) of at least one of the guide parts (12) are used for fixedly installing the connecting member, so that the connecting member can avoid the guide groove (14).

5. The splicing portal frame according to claim 4, wherein,
the first outer surface (131) is provided with a first installation locating groove (132), the first installation locating groove (132) extends along the first direction and is used for locating and installing a first screw that fastens the connecting member with the column unit (10); and/or,
the second outer surface (121) is provided with a second installation locating groove (122), the second installation locating groove (122) extends along the first direction and is used for locating and installing a second screw that fastens the connecting member with the column unit (10).

6. The splicing portal frame according to claim 4, wherein the support part (13) is arranged to be hollow.

7. The splicing portal frame according to claim 1, wherein each column unit (10) comprises a first column profile (15) extending along the first direction;
wherein, the locating columns (21) and the locating holes (22) are respectively arranged at two docking end faces of one pair of first column profiles (15), and the connecting member comprises a first connection profile (231), and two ends of the first connection profile (231) are respectively fixed at ends of the pair of the first column profiles (15).

8. The splicing portal frame according to claim 1, wherein the column unit (10) comprises a second column profile (16) extending along the first direction and a connection flange (17) fixedly installed on an end face of the second column profile (16);
wherein, the locating columns (21) and the locating holes (22) are respectively arranged on two docking end faces of one pair of the connection flanges (17), and the connecting member comprises one pair of second connection profiles (232), which are fixedly installed at docking ends of the second column profiles (16) and are fixedly installed to the connection flanges (17); and
the connecting member further comprises flange connection screws (30) for fixedly installing the pair of the connection flanges (17) that are docked.

9. The splicing portal frame according to claim 8, wherein the connection flange (17) is arranged to protrude relative to a cross section of the second column profile (16) in a plane perpendicular to the first direction;
wherein, the second connection profile (232) comprises a first installation part (2321) extending along the first direction, an end of the first installation part (2321) facing the connection flange (17) is provided with a second installation part (2322) perpendicular to the first direction, and the second installation part (2322) is used to abut against a portion of the connection flange (17) protruding relative to the cross section of the second column profile (16); and
the flange connection screws (30) are used for fixedly installing the pair of the connection flanges (17) that are docked and the pair of the second installation parts (2322).

10. A rail transfer robot, wherein the rail transfer robot comprises a splicing portal frame and a transfer mechanism (100) installed on the splicing portal frame in a manner capable of lifting and lowering, wherein the splicing portal frame is the splicing portal frame according to any one of claims 1 to 9.
